# EUROPÄISCHE PATENTSCHRIFT

(11) **EP 1 272 304 B1**
(45) Veröffentlichungstag und Bekanntmachung des Hinweises auf die Patenterteilung: **03.08.2005**
(21) Anmeldenummer: 01915029.1
(22) Anmeldetag: 20.02.2001
(51) Int. Cl.: B23B 27/14

(54) **SCHNEIDEINSATZ**
CUTTING INSERT
OUTIL DE COUPE RAPPORTE

(30) Priorität: 13.04.2000 DE 10018452
(43) Veröffentlichungstag der Anmeldung: 08.01.2003
(73) Patentinhaber: Widia GmbH, 45145 Essen (DE)
(72) Erfinder: WÜRFELS, Andreas, 50823 Köln (DE); HINTZE, Wolfgang, D-21077 Hamburg (DE)
(74) Vertreter: Vomberg, Friedhelm, Dipl.-Phys.
(86) Internationale Anmeldenummer: PCT/DE2001/000674
(87) Internationale Veröffentlichungsnummer: WO 2001/078926

(56) Entgegenhaltungen:
- WO-A-95/00272
- WO-A-99/00207

## Beschreibung

Die Erfindung betrifft einen Schneideinsatz für Zerspanungsarbeiten, insbesondere zum Plan- und Längsdrehen von Werkstücken, bestehend aus einem polygonalen Körper mit einer Spanfläche, einer hierzu beabstandeten Auflagefläche sowie die Span- und die Auflagefläche verbindenden Freiflächen, wobei die Spanfläche und die Freiflächen jeweilige Schneidkanten bilden, und mit mindestens einer durch zwei Schneidkanten gebildeten gekrümmten Schneidecke mit mehreren, unterschiedliche Krümmungsradien aufweisenden Bereichen.

Ein dementsprechender Schneideinsatz ist beispielsweise aus der EP 0 706 433 B1 bekannt. Der dort beschriebene Schneideinsatz besitzt in einer Draufsicht auf die Spanfläche betrachtet einen mittleren Schneideckenbereich mit einem ersten Krümmungsradius und sich beidseitig hieran anschließende zweite Bereiche mit einem zweiten, größeren Krümmungsradius. Der Schneideinsatz soll so zu einem zu bearbeitenden Werkstück ausgerichtet sein, daß die Tangente wenigstens eines Zwischenpunktes auf dem zweiten Bereich mit dem größeren Krümmungsradius parallel zur Vorschubrichtung liegt, so daß mit diesem Schneidkantenbereich beim Längs- oder Plandrehen eine glattere Werkstückoberfläche erzeugt werden kann.

Die WO 95/32071 und die denselben Gegenstand betreffende US 5 634 745 beschreiben Schneideinsätze zum Drehen, deren abgerundete Schneidecken in wenigstens fünf Kreissegmente aufgeteilt ist, wobei die Kreissegmente vorzugsweise spiegelsymmetrisch zu einer Schneideckenwinkelhalbierenden ausgebildet sein sollen und wenigstens drei verschiedene Radien besitzen, wobei die Relation erfüllt sein soll, daß der von dem Schneideckenmittelpunkt am weitesten entfernt liegende Krümmungsbereich einen größeren Radius hat als der mittlere Schneideckenbereich und daß dieser Radius wiederum größer ist als der Krümmungsradius in den dazwischenliegenden Bereichen. In den vorgenannten Dokumenten zum Stand der Technik ist die Schneidecke bzw. sind die sich an die Schneidecke anschließenden Freiflächenbereiche einheitlich konvex ausgebildet.

Die US 5 226 761 beschreibt einen Schneideinsatz zum Drehen oder Bohren, der mindestens eine Schneidecke aufweist, die in ihrem mittleren, sich über einen Winkel ε erstreckenden Bereich einen einheitlichen Krümmungsradius besitzt und woran sich auf beiden Seiten über eine Länge 1 geradlinige Schneidkantenabschnitte anschließen, die einen gegenüber dem vorgenannten Winkel ε größeren Winkel β bilden. Der Schneideinsatz besitzt auf der Spanfläche im Anschluß an die Schneidkante eine Spanformnut, so daß der Spanwinkel der Schneidecke positiv ist. Die Spanformnut wird durch eine sich an die Schneidkante anschließende abfallend geneigte Flanke gebildet, an die sich zur Schneideinsatzmitte hin jeweils im Abstand ansteigende Bereiche zum Spanbrechen anschließen. Die genannte Länge 1, entlang der die Schneidkante geradlinig sein soll, soll mindestens so groß wie der maximale Schneideinsatzvorschub sein.

Es ist Aufgabe der vorliegenden Erfindung, eine alternative Lösung für einen Schneideinsatz zu entwickeln, der geeignet ist, beim Plan- und Längsdrehen, insbesondere beim Längsdrehen mit gleichen Vorschubwerten eine Werkstückoberfläche zu schneiden, die gegenüber einer mit einem Schneideinsatz mit einer einheitlich gekrümmten Schneidecke geschnittenen Werkstück eine geringere Oberflächenwelligkeit aufweist.

Diese Aufgabe wird durch den Schneideinsatz nach Anspruch 1 gelöst.

Erfindungsgemäß besitzt dieser Schneideinsatz, der als einseitig oder doppelseitig verwendbare Wendeschneidplatte mit zwei gegenüberliegenden Spanflächen ausgebildet sein kann, nicht nur einen mittleren Schneideckenbereich mit einem ersten Krümmungsradius und sich hieran anschließende Bereiche mit einem größeren Krümmungsradius, sondern zusätzlich einen Teilbereich, in dem die Schneidkante abgesenkt ist. Dieser Bereich liegt im Abstand zum Schneideckenmittelpunkt (Schnittpunkt der Schneideckenwinkelhalbierenden mit der Schneidkante) und schafft eine in diesem Bereich konkave Schneidkante. Bei einer negativen Einbaulage eines solchen Schneideinsatzes in einen Werkzeughalter ergibt sich hiermit über den genannten Teilbereich eine Abflachung der Schneidkante, die für eine sehr geringe Oberflächenwelligkeit auch bei hohen Vorschüben sorgt. Vorteilhafterweise wird durch den abgesenkten Schneidkantenteilbereich die Schnittkraft verringert. Der Abstand, den der abgesenkte Schneidkantenbereich von dem Schneideckenmittelpunkt hat, wird im wesentlichen durch die Größe des Schneideinsatzes einerseits und durch die Vorschubgeschwindigkeit andererseits dergestalt bestimmt, daß der abgesenkte Schneidkantenbereich als Schneidenteil zum Glätten bzw. Schlichten der Werkstückoberfläche dient.

Weiterbildungen der Erfindung sind in den Unteransprüchen beschrieben.

Nach einer konkreten Ausführungsform liegt der erste Krümmungsradius des mittleren Schneideckenbereiches zwischen 0,1 mm und 2,4 mm, vorzugsweise zwischen 0,4 mm bis 1,6 mm, und der zweite, größere Krümmungsradius des sich hieran anschließenden Schneidkantenbereiches zwischen 1 mm und 28 mm, vorzugsweise zwischen 4 mm und 19 mm. Zusätzlich oder alternativ soll der größere Krümmungsradius zwischen dem 6fachen und dem 12fachen Wert des ersten Radius gemäß der Beziehung 6 x R₁ ≤ R₂ ≤ 12 x R₁ liegen.

Der Abstand, den der tiefste Punkt des abgesenkten Schneidkantenbereiches gegenüber dem Niveau benachbarter, außerhalb der Absenkung liegender Schneidkantenbereiche hat, liegt zwischen 0,04 mm und 0,4 mm, vorzugsweise zwischen 0,1 mm und 0,2 mm. Der Bereich der Schneidkantenabsenkung ist weiterhin (im mathematischen Sinne) stetig konkav gekrümmt und erstreckt sich im wesentlichen über den Bereich, in dem die Schneidkante unter dem größeren Krümmungsradius verläuft, vorzugsweise dergestalt, daß ein Teil des abgesenkten Schneidkantenbereiches in den mittleren Schneideckenbereich unter dem kleineren Krümmungsradius hineinreicht. Die Schneidkantenabsenkung ist beidseitig zu ihrem tiefsten Absenkungspunkt, der im Bereich des größeren Schneidkantenkrümmungsbereiches liegt, annähernd spiegelsymmetrisch ausgebildet.

Wie bereits erwähnt, wird der vorbeschriebene Schneideinsatz in einen Schneideinsatzhalter in einer negativen Einbaulage angeordnet, vorzugsweise unter den Neigungswinkeln 3° ≤ α ≤ 10° und 3° ≤ β ≤ 10°, insbesondere unter den Neigungswinkeln zwischen 5° und 8°. Diese Einbaulage gilt für solche Schneideinsätze, deren Freiwinkel 0° beträgt. Bei positiven Schneideinsätzen (Schneideinsätzen mit positivem Freiwinkel), die in einem Schneideinsatzhalter nicht negativ eingebettet sind, ergibt sich durch die Schneidkantenabsenkung bei entsprechenden Einbaulagen ebenfalls eine "Abflachung" der Schneidkante, die dann als Schlicht-Schneide dient.

Alternativ wird die vorstehende Aufgabe durch den Schneideinsatz nach Anspruch 5 gelöst, der als einseitig oder doppelseitig verwendbare Wendeschneidplatte ausgebildet sein kann.

Im Gegensatz zu dem vorstehend beschriebenen Lösungsweg, bei dem die Freifläche der Schneidkantenform folgend konvex ausgebildet ist und die Spanfläche im abgesenkten Schneidkantenbereich konkav verläuft, besitzt in einem alternativen Lösungsweg mindestens eine der Schneidkanten, in einer Draufsicht betrachtet, einen mittleren konvexen Schneideckenbereich mit einem ersten Radius und einen hierneben liegenden konkaven Schneidkantenbereich mit einem größeren Radius, wobei der konkave Schneidkantenbereich zusätzlich angehoben ist, so daß die Schneidkante in diesem Bereich in einer Seitenansicht betrachtet konvex verläuft. Entsprechung dieser Ausführungsform ist somit in dem vorbeschriebenen Schneidkantenbereich die darunterliegende Freifläche konkav und die Spanfläche im Anschluß an die Schneidkante konvex ausgeführt. Eine sich durch die genannte Schneidkantenerhöhung vergrößerte Passivkraft kann durch einen entsprechend positiv gewählten Spanwinkel verringert bzw. kompensiert werden.

Nach einer Weiterbildung der vorgenannten Ausführungsform liegt der Abstand, den der höchste Punkt des angehobenen Schneidkantenbereiches gegenüber dem Niveau benachbarter, nicht angehobener Schneidkantenbereiche hat, zwischen 0,04 mm und 0,4 mm, vorzugsweise zwischen 0,1 mm und 0,2 mm.

Nach einer weiteren Ausgestaltung der vorgenannten Ausführungsform ist zwischen dem mittleren Schneideckenbereich und dem konkaven Schneidkantenbereich ein Schneidkantenübergangsbereich vorgesehen, der einen Krümmungsradius zwischen 0,1 mm und 0,4 mm aufweist.

Grundsätzlich ist es bei beiden vorgenannten Ausführungsformen nur erforderlich, daß nur eine der Schneidkanten einen entsprechend erhöhten bzw. abgesenkten Bereich aufweist. Will man jedoch den Schneideinsatz sowohl für links- oder rechtsdrehende Bearbeitungen verwenden, werden die Schneidkanten spiegelsymmetrisch zur Schneideckenwinkelhalbierenden ausgebildet, d.h., beidseitig der Schneideckenmitte sind im Abstand entsprechende Schneidkantenabsenkungen oder -erhöhungen in der vorbeschriebenen Form vorgesehen.

Insbesondere wird die vorbeschriebene Schneideckenausgestaltung bei einem rhombischen Schneideinsatz an gegenüberliegenden spitzwinkligen Schneidecken ausgebildet.

Die Länge des abgesenkten oder des angehobenen Schneidkantenbereiches liegt nach einer Ausführungsform der Erfindung zwischen 0,2 mm und 2,9 mm, vorzugsweise zwischen 0,4 mm bis 1,2 mm, wobei alternativ oder zusätzlich die Bedingung 0,4 R₁ ≤ bₛ ≤ 1,2 R₁ erfüllt ist, wobei R₁ der Radius des mittleren Schneideckenbereiches und bₛ die Länge des abgesenkten oder angehobenen Schneidkantenbereiches ist.

Zusätzlich und wie grundsätzlich nach dem Stand der Technik bekannt, besitzt der sich senkrecht zur Schneidkante anschließende Spanflächenbereich eine abfallende Flanke, die nach einer weiteren Ausgestaltung Teil einer Spanformnut ist, die sich parallel zur Schneidkante erstreckt. Zusätzlich kann der Schneideinsatz noch im Abstand zur Schneidkante erhaben ausgebildete Spanformelemente auf der Spanfläche aufweisen, die sich entweder in die Spanformnut erstrecken oder hierzu beabstandet sind. Die Spanformnut sowie etwaige erhabene Spanformelemente dienen dazu, den beim Zerspanen ablaufenden Span zu krümmen und derart aufzubiegen, daß der Span leicht brechen kann. Vorzugsweise wird die Nebenschneide des Schneideinsatzes beim Zerspanen, d.h. in Einbaulage zur erzeugten Werkstückoberfläche, unter einem Winkel 2° ≤ κ ≤ 10°, weiterhin vorzugsweise unter einem Winkel 4° ≤ κ ≤ 6° ausgebildet.

Die vorliegende Erfindung wird im folgenden anhand von weiteren Ausführungsbeispielen erläutert, die in den Zeichnungen dargestellt sind. Es zeigen
- Fig. 1: eine Draufsicht auf eine erfindungsgemäße rhombische Wendeschneidplatte,
- Fig. 2: eine Teilansicht einer spitzwinkligen Schneidecke des Schneideinsatzes nach Fig. 1,
- Fig. 3a: eine Seitenansicht eines doppelseitig verwendbaren Schneideinsatzes nach Fig. 1,
- Fig. 3b: eine Seitenansicht eines einseitig verwendbaren Schneideinsatzes nach Fig. 1,
- Fig. 4: eine Detailansicht des Schneidkantenverlaufes im Eckenbereich gemäß Fig. 3a,
- Fig. 5: den nach Fig. 1 bis 4 dargestellten Schneideinsatz in einer schematischen Darstellung in seiner Einbaulage in einem Schneideinsatzhalter,
- Fig. 6: eine Detailansicht einer Schneidecke gemäß Fig. 5,
- Fig. 7: die Draufsicht auf einen rhombischen Schneideinsatz mit einer unter einem positiven Winkel geneigten Freifläche,
- Fig. 8: eine Seitenansicht des Schneideinsatzes nach Fig. 7,
- Fig. 9: eine Detailansicht der Schneidecke des Schneideinsatzes gemäß Fig. 8,
- Fig. 10: eine Draufsicht auf einen rhombischen Schneideinsatz in einer weiteren Ausführungsform,
- Fig. 11: eine Detailansicht des Schneideinsatzes nach Fig. 10 im Schneideckenbereich,
- Fig. 12: eine Seitenansicht des Schneideinsatzes nach Fig. 10,
- Fig. 13: eine Detailansicht des Schneideinsatzes nach Fig. 12,
- Fig. 14: eine perspektivische Darstellung einer Wendeschneidplatte mit einer Spanformnut,
- Fig. 15: die Wendeschneidplatte nach Fig. 14, dargestellt in ihrer Einbaulage,
- Fig. 16: einen Schnitt entlang der Linie A - A in Fig. 15,
- Fig. 17: einen Schnitt entlang der Linie B - B in Fig. 15 und
- Fig. 18: eine Wendeschneidplatte gemäß Fig. 14 bis 17 in ihrer Einbaulage beim Längsdrehen.

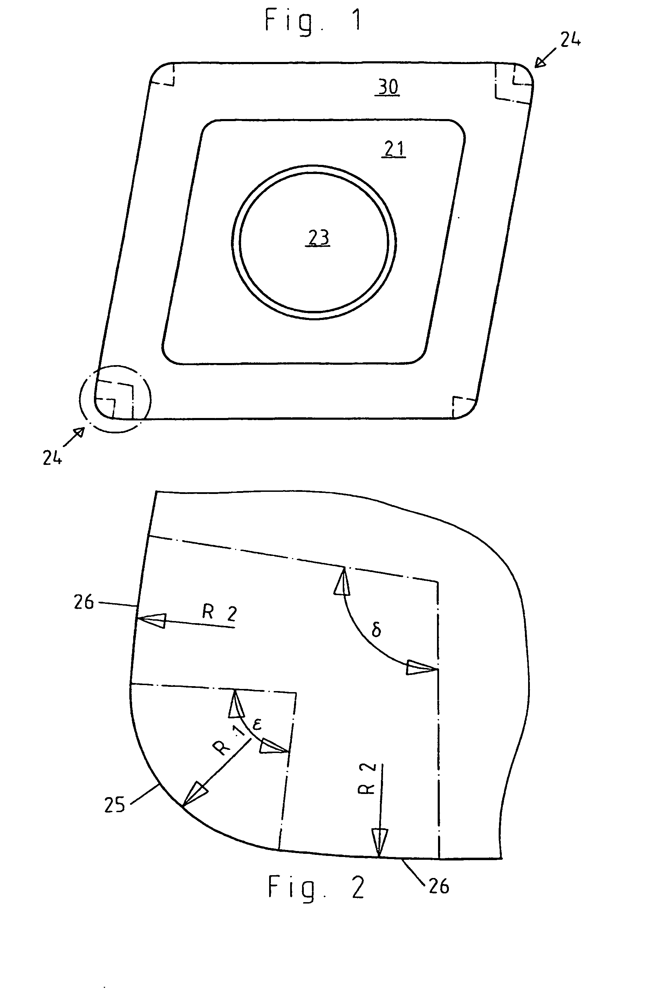

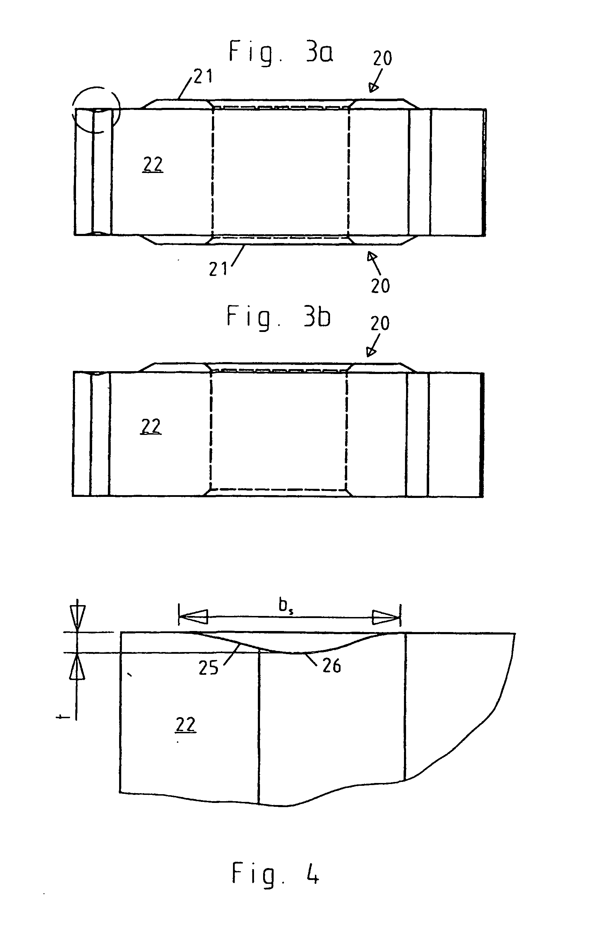

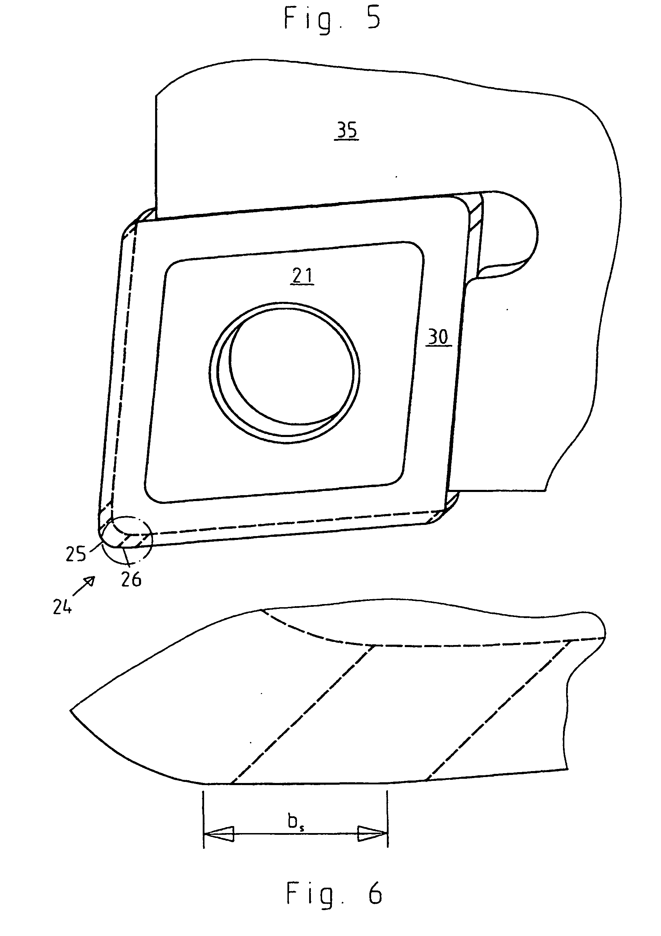

Die in den Abbildungen dargestellten Schneideinsätze besitzen einheitlich eine Spanfläche 20 sowie eine Auflagefläche 21 und jeweilige Freiflächen 22, wobei die Schneideinsätze auch als doppelseitig verwendbare Wendeschneidplatte ausgebildet sein können, d.h., daß die Auflagefläche 21 auch als Spanfläche und umgekehrt dienen kann, wie dies in Fig. 3a, 12 und 14 bis 18 dargestellt ist. Zur Befestigung der Schneidplatte in einem Halter ist ein Befestigungsloch 23 zur Aufnahme einer Spannschraube vorgesehen. Wie anhand der Fig. 1 bis 9 erkennbar, ist die Schneidplatte im Bereich der spitzwinkligen Ecken 24 erfindungsgemäß derart ausgestaltet, daß in einem mittlere Bereich 25 der Schneidecken, der sich im vorliegenden Fall über einen Winkel ε ≤ 90° erstreckt, einheitlich konvex abgerundet. Dieser Bereich 25 besitzt einen Krümmungsradius R₁ in der vorbeschriebenen Größenordnung. In dem sich jeweils seitlich hieran anschließenden zweiten Bereich 26, dessen auf den Endpunkten angeordneten Schneidkantensenkrechten einen Winkel δ ≥ 90° einschließen, im vorliegenden Fall 100°. Die Schneidkantenbereiche 26 sind ebenfalls konvex gekrümmt und besitzen einen Radius R₂, der größer als der vorgenannte Radius R₁ ist. Wie insbesondere aus Fig. 4 ersichtlich ist, ist die Schneidkante in einem Teilbereich der Länge bₛ (siehe Fig. 6), der sich im wesentlichen in dem Bereich befindet, in dem die Schneidkante einen Krümmungsradius R₂ aufweist, abgesenkt. Die Absenkung erstreckt sich jedoch zu einem Teil bis in den mittleren Schneideckenbereich mit dem Krümmungsradius R₁. Durch diese Schneidkantenabsenkung mit einer maximalen Tiefe, die dem Abstand t des Schneidkantenminimums von dem Niveau der neben der Schneidkantenabsenkung liegenden Schneidkante entspricht, ist die Spanfläche in diesem Bereich konkav ausgebildet.

Fig. 5 zeigt den Schneideinsatz nach Fig. 1 bis 4 in seiner Einbaulage in einem Halter 35. Aufgrund der gewählten negativen Einbaulage wirkt sich die Schneidkantenabsenkung über den Bereich bₛ wie eine Abflachung der Schneidkante aus, die bei Zerspanungsoperationen eine Oberfläche mit geringer Welligkeit schneidet.

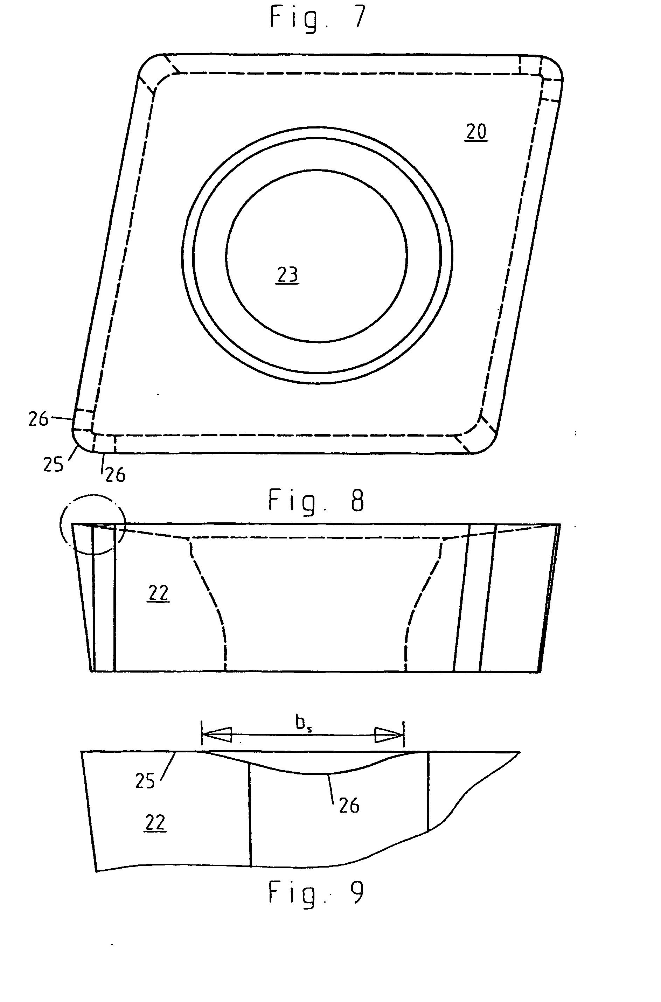

In den Fig. 7 bis 9 ist ein entsprechender Schneideinsatz dargestellt, der sich von dem vorstehend beschriebenen Schneideinsatz nur dadurch unterscheidet, daß er unter einem positiven Freiwinkel angeordnete Freiflächen 22 besitzt. Die in gleicher Weise ausgeführte Schneidkantenabsenkung führt hier zu denselben Ergebnissen, wenn der Schneideinsatz in einer 0°- oder positiven Einbaulage in einem Halter eingebettet wird.

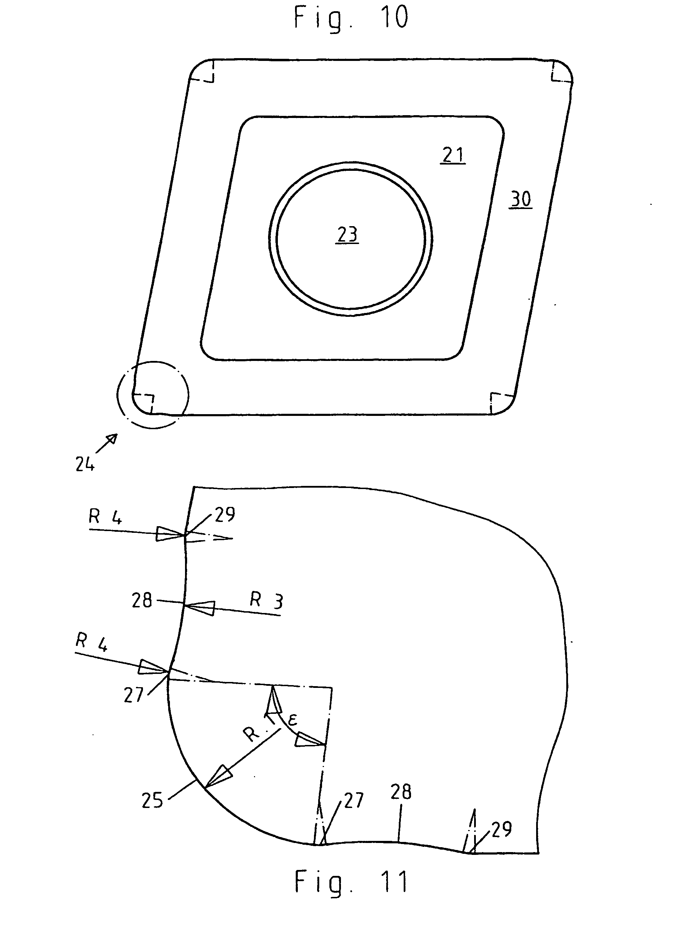

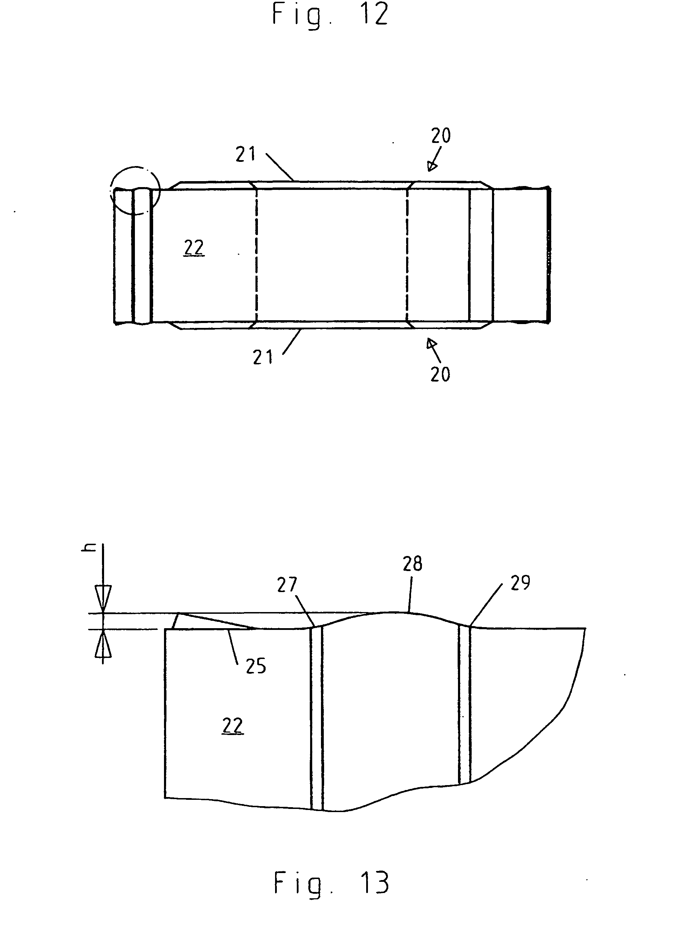

Alternativ zu den vorbeschriebenen Schneideinsätzen ist der Schneideinsatz nach Fig. 10 bis 13 im Schneideckenbereich derart ausgestaltet, daß sich an den mittleren Schneideckenbereich mit einem Radius R₁ beidseitig Übergangsbereiche 27 mit einem konvexen Radius R₄ anschließt und hieran jeweils ein konkaver Schneidkantenbereich 28, der über einen kleinen Übergangsbereich 29 mit dem bereits genannten Radius R₄ in die Fortsetzung der Schneidkante übergeht. In dem konkaven Bereich 28 der Schneidkante, unterhalb der auch die Freifläche konkav ausgestaltet ist, ist die Schneidkante in einer Seitenansicht gemäß Fig. 13 betrachtet zusätzlich um den in Fig. 13 dargestellten Abstand h angehoben, so daß sich in einer auf die Freifläche gerichteten Seitenansicht ein konvexer Schneidkantenverlauf ergibt.

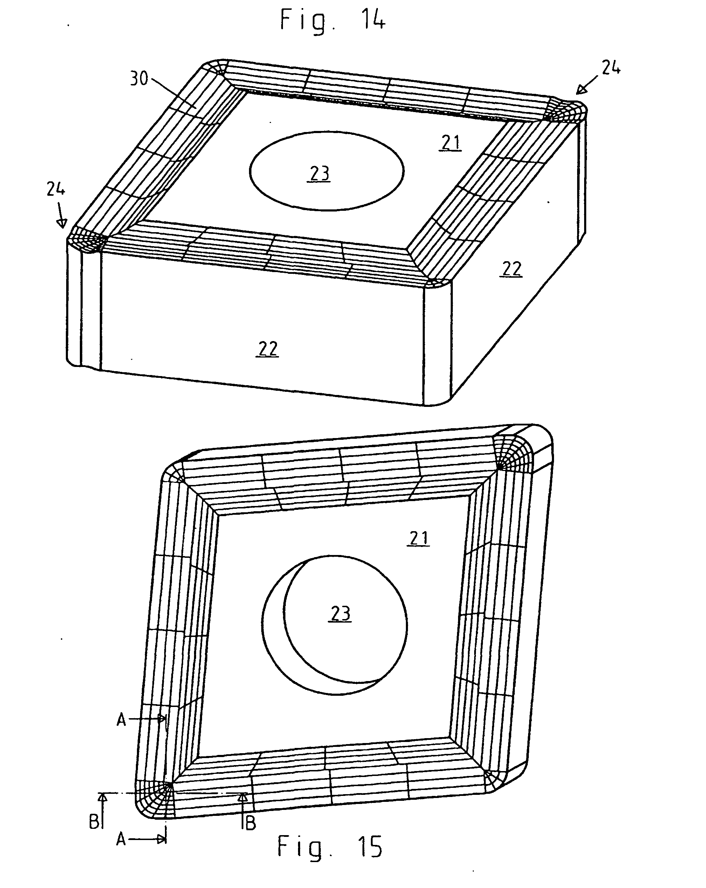

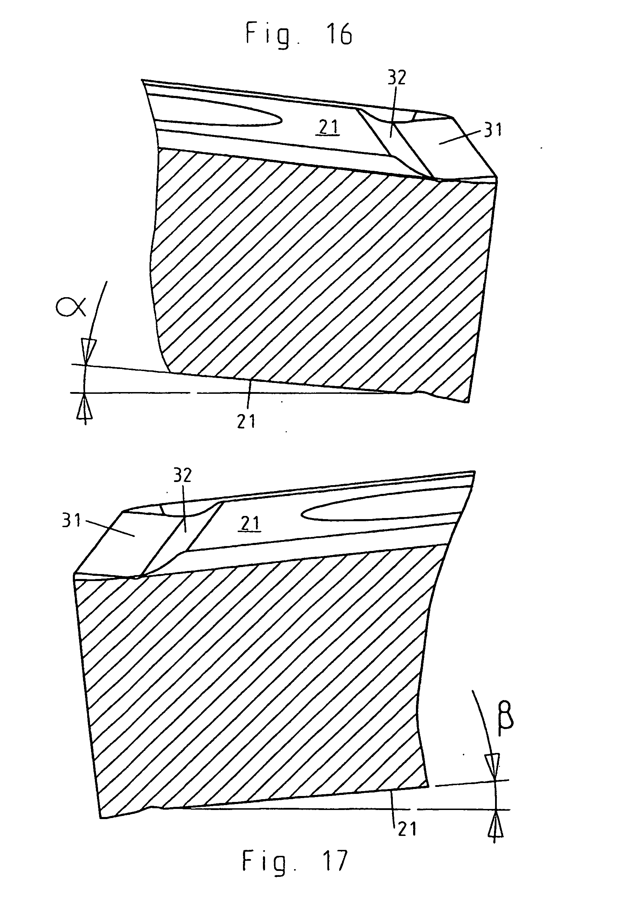

Die Fig. 14 bis 17 zeigen darüber hinausgehend, daß über die gesamte Schneidkantenlänge, insbesondere aber im Bereich der Schneidecken 24 eine Spanformnut 30 vorgesehen ist, die gemäß Fig. 16 aus einer abfallenden, einen positiven Spanwinkel bildenden Flanke 31 sowie Anstiegsflanken 32 gebildet wird. Die Winkel α und β zeigen die Einbaulage des Schneideinsatzes im Halter, die durch die Neigung der jeweils verwendeten Auflagefläche bestimmt wird.

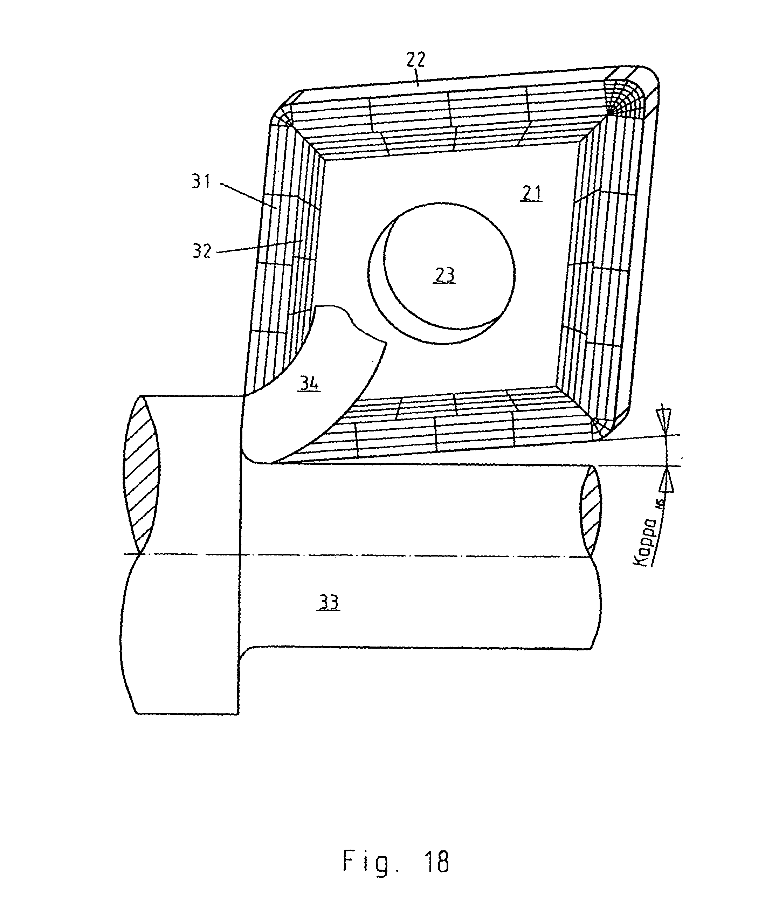

Fig. 18 zeigt einen Schneideinsatz in einer Einbaulage beim Längsdrehen eines Werkstückes 33 unter einem Einstellwinkel κ (der Nebenschneide), der zwischen 2° und 10°, vorzugsweise 4° und 6° liegt. Der ablaufende Span 34 ist schematisch angedeutet.

## Patentansprüche

1. Schneideinsatz für Zerspanungsarbeiten, insbesondere zum Plan- und Längsdrehen von Werkstücken (33), bestehend aus einem polygonalen Körper mit einer Spanfläche (20), einer hierzu beabstandeten Auflagefläche (21) sowie die Span- und die Auflagefläche verbindenden Freiflächen (22), wobei die Spanfläche (20) und die Freiflächen (22) jeweilige Schneidkanten bilden, und mit mindestens einer durch zwei Schneidkanten gebildeten abgerundeten Schneidecke (24), die - in einer Draufsicht auf die Spanfläche (20) betrachtet - einen mittleren Bereich (25) mit einem ersten Krümmungsradius (R₁) und sich jeweils seitlich hieran anschließende zweite Bereiche (26) mit einem zweiten, größeren Krümmungsradius (R₂) besitzt,
**dadurch gekennzeichnet,**
**daß** mindestens eine der Schneidkanten im Abstand zu dem durch die Schneideckenwinkelhalbierenden bestimmten Schneideckenmittelpunkt, aber im abgerundeten Schneideckenbereich über einen Teilbereich (bₛ) abgesenkt ist.

2. Schneideinsatz nach Anspruch 1, **dadurch gekennzeichnet, daß** der erste Krümmungsradius (R₁) 0,1 mm bis 2,4 mm, vorzugsweise 0,4 mm bis 1,6 mm, und der zweite Krümmungsradius (R₂) 1 mm bis 28 mm, vorzugsweise 4 mm bis 19 mm, groß ist und/oder daß der größere Krümmungsradius (R₂) zwischen dem 6fachen und dem 12fachen Wert des ersten Krümmungsradius (6 x R₁ ≤ R₂ ≤ 12 x R₁) liegt.

3. Schneideinsatz nach Anspruch 1 oder 2, **dadurch gekennzeichnet, daß** der Abstand (t), den der tiefste Punkt des abgesenkten Schneidkantenbereiches gegenüber dem Niveau benachbarter, außerhalb der Absenkung liegender Schneidkantenbereiche hat, zwischen 0,04 mm und 0,4 mm, vorzugsweise zwischen 0,1 mm und 0,2 mm, liegt und/oder daß der Bereich der Schneidkantenabsenkung stetig konkav gekrümmt verläuft und im wesentlichen in dem Bereich liegt, in dem die Schneidkante unter dem größeren Krümmungsradius (R₂) verläuft, vorzugsweise dergestalt, daß ein Teil des abgesenkten Schneidkantenbereiches in dem mittleren Schneideckenbereich mit einem Krümmungsradius (R₁) hineinreicht.

4. Schneideinsatz nach einem der Ansprüche 1 bis 3, **dadurch gekennzeichnet, daß** der Schneideinsatz in einen Schneideinsatzhalter in einer negativen Einbaulage unter den Einbettungswinkeln (α) und (β), die 3° ≤ α ≤ 10° und 3° ≤ β ≤ 10°, vorzugsweise 5° ≤ α ≤ 8° und 5° ≤ β ≤ 8° betragen, angeordnet ist und/oder daß der Schneideinsatz unter einem positiven Winkel angeordnete Freiflächen aufweist und im Schneideinsatzhalter in einer 0°- oder einer Positiven Einbaulage angeordnet ist.

5. Schneideinsatz für Zerspanungsarbeiten, insbesondere zum Plan- und Längsdrehen von Werkstücken (33), bestehend aus einem polygonalen Körper mit einer Spanfläche (20), einer hierzu beabstandeten Auflagefläche (21) sowie die Span- und die Auflagefläche verbindenden Freiflächen (22), wobei die Spanfläche (20) und die Freiflächen (22) jeweilige Schneidkanten bilden, und mit mindestens einer durch zwei Schneidkanten gebildeten gekrümmten Schneidecke mit mehreren, unterschiedliche Krümmungsradien aufweisenden Bereichen, **dadurch gekennzeichnet, daß** mindestens eine der Schneidkanten - in einer Draufsicht betrachtet - einen mittleren konvexen Schneideckenbereich mit einem ersten Radius (R₁) und einer hierneben liegenden konkaven Schneidkantenbereich mit einem größeren Radius (R₃) besitzt und daß der konkave Schneidkantenbereich zusätzlich angehoben ist, so daß die Schneidkante in diesem Bereich in einer Seitenansicht (auf die Freifläche) betrachtet konvex verläuft.

6. Schneideinsatz nach Anspruch 5, **dadurch gekennzeichnet, daß** der Abstand (h), den der höchste Punkt des angehobenen Schneidkantenbereiches gegenüber dem Niveau benachbarter, nicht angehobener Schneidkantenbereiche hat, zwischen 0,04 mm und 0,4 mm, vorzugsweise zwischen 0,1 mm und 0,2 mm, liegt und/oder daß zwischen dem mittleren Schneideckenbereich und dem konkaven Schneidkantenbereich ein Schneidkantenübergangsbereich vorgesehen ist, der einen Krümmungsradius (R₄) zwischen 0,1 mm bis 0,4 mm aufweist.

7. Schneideinsatz nach einem der Ansprüche 1 bis 6, **dadurch gekennzeichnet, daß** die Schneidkanten spiegelsymmetrisch zur Schneideckenwinkelhalbierenden ausgebildet sind.

8. Schneideinsatz nach einem der Ansprüche 1 bis 7, **dadurch gekennzeichnet, daß** der Schneideinsatz eine rhombische Form aufweist und die unterschiedlich gekrümmten Schneideckenbereiche in den gegenüberliegenden spitzwinkligen Schneidecken ausgebildet sind und/oder daß der abgesenkte oder der angehobene Schneidkantenbereich eine Länge (bₛ) zwischen 0,2 mm und 2,9 mm, vorzugsweise 0,4 mm und 1,2 mm, hat und/oder die Bedingung 0,4 R₁ ≤ bₛ ≤ 1,2 R₁ erfüllt.

9. Schneideinsatz nach einem der Ansprüche 1 bis 8, **dadurch gekennzeichnet, daß** der sich senkrecht zur Schneidkante anschließende Spanflächenbereich eine abfallende Flanke aufweist, wobei die Flanke (31) Teil einer Spanformnut (30) ist, die sich parallel zu Schneidkante erstreckt.

10. Schneideinsatz nach einem der Ansprüche 1 bis 9, **dadurch gekennzeichnet, daß** im Abstand zur Schneidkante erhaben ausgebildete Spanformelemente auf der Spanfläche angeordnet sind und/oder daß die Nebenschneide des Schneideinsatzes beim Zerspanen zum Werkstück unter einem Winkel2° ≤ κ ≤ 10°, vorzugsweise 4° ≤ κ ≤ 6° ausgerichtet ist.

## Claims

1. Cutting insert for chip-removing machining, in particular for facing and turning workpieces (33), the insert comprising a polygonal body with a rake face (20), a support face (21) offset therefrom, and clearance faces 822) joining the rake and support faces, the clearance faces (22) forming with the rake face (20) respective cutting edges, two of the cutting edges forming at least one rounded cutting corner (24) that, seen in top view looking at the chip face (29), has a central zone (25) with a first radius of curvature (R₁) and flanking second zones (26) with a second larger radius of curvature (R₂),
**characterized in that**
at least one of the cutting edges is recessed across a partial section (bₛ) offset from a cutting-corner center point lying on a cutting-corner bisector, but within the curved cutting corner region.

2. Cutting insert according to claim 1, **characterized in that** the first radius of curvature (R₁) is 0,1 mm to 2,4 mm, preferably 0,4 mm to 1,6 mm, and the second radius of curvature (R₂) is 1 mm to 28 mm, preferably 4 mm to 19 mm, and/or that the larger radius of curvature (R₂) is between six and twelve times as great as the first radius of curvature (6 x R₁ ≤ R₂ ≤ 12 x R₁).

3. Cutting insert according to claim 1 or 2, **characterized in that** the spacing (t) to a deepest point of the recessed cutting-edge none relative to a level of the adjacent cutting edge outside the recess is between 0,04 mm and 0,4 mm, preferably between 0,1 mm and 0,2 mm and/or that the region of the cutting-edge recess is uniformly concavely curved and lies generally in a region where the cutting edge has the larger radius of curvature (R₂) preferably such that a portion of the recessed cutting-edge zone extends into the central cutting-corner zone with the radius of curvature (R₁).

4. Cutting insert according to one of claims 1 to 3, **characterized in that** the cutting insert is mounted in a cutting-insert holder in a negative position at a mounting angles (α) and (β) equal to 3° ≤ α ≤ 10° and 3° ≤ β ≤ 10°, preferably 5° ≤ α ≤ 8° and 5° ≤ β ≤ 8° and/or that the cutting insert has clearance faces set at a positive angle and is mounted in the cutting-insert holder at 0° or a positive mounting angle.

5. Cutting insert for chip-removing machining, in particular for facing and turning workpieces (33), the insert comprising a polygonal body with a rake face (20), a support face (21) offset therefrom, clearance faces (22) joining the rake and support faces (22) and forming with the rake face (20) respective cutting edges, and at least one curved cutting corner formed by two cutting edges and having a plurality of zones of different radii of curvature, **characterized in that** at least one of the cutting edges seen from above has a central convex cutting-corner zone with a first radius (R₁) and an adjacent concave cutting-edge zone with a larger radius (R₃) and that the concave cutting-edge zone is raised so that the cutting edge seen in side view is r convexly shaped in this zone.

6. Cutting insert according to claim 5, **characterized in that** the spacing (h) from a highest point of the raised cutting-edge zone to adjacent unraised cutting-edges portions is between 0,04 mm and 0,4 mm, preferably between 0,1 mm and 0,4 mm.

7. Cutting insert according to one of claim 1 to 6, **characterized in that** the cutting edges are mirror-symmetrical to a bisector of the cutting-edge corner.

8. Cutting insert according to one of claim 1 to 7, **characterized in that** the cutting insert is rhombic and the differently curved cutting edge zones are formed in opposite acute-angle cutting corners and/or that the recessed or raised cutting-edge zone has a length (bₛ) between 0,2 mm and 2,9 mm, preferably 0,4 mm and 1,2 mm, and/or satisfies the equation 0,4 R₁ ≤ bₛ ≤ 1,2 R₁.

9. Cutting insert according to one of claims 1 to 8, **characterized in that** a chip-face zone adjacent and transverse to the cutting edge has a descending flank, whereby the flank (31) is part of a chip-shaping groove (30) that extends parallel to the cutting edge.

10. Cutting insert according to one of claim 1 to 9, **characterized in that** raised chip-shaping elements are provided on the chip face at a spacing from the cutting edge and/or that an auxiliary edge of the cutting insert is set during machining of a workpiece at an angle κ equal to 2° ≤ κ ≤ 10°, preferably 4° ≤ κ ≤ 6°.

## Revendications

1. Insert de coupe pour les travaux par enlèvement de copeaux, en particulier pour le surfaçage et le tournage longitudinal de pièces (33), se composant d'un corps polygonal avec une face de coupe (20), une surface d'appui (21) espacée par rapport à celle-ci ainsi qu'avec des faces de dépouille (22) reliant la face de coupe et la surface d'appui, la face de coupe (20) et les faces de dépouille (22) formant des tranchants respectifs, et avec au moins un coin de coupe (24) arrondi formé par deux tranchants, qui - vu dans une vue de dessus sur la face de coupe (20) - possède une zone centrale (25) ayant un premier rayon de courbure (R₁), ainsi que de secondes zones (26) qui sont respectivement latéralement contiguës à cette dernière et présentent un deuxième rayon de courbure (R₂) plus important,
**caractérisé par le fait**
**qu'**à distance du point central du coin de coupe, qui est déterminé par les bissectrices du coin de coupe, mais dans la zone arrondie du coin de coupe, l'un au moins des tranchants est abaissé sur une zone partielle (bₛ).

2. Insert de coupe selon la revendication 1, **caractérisé par le fait que** le premier rayon de courbure (R₁) est compris entre 0,1 mm et 2,4 mm, de préférence entre 0,4 mm et 1,6 mm et que le deuxième rayon de courbure (R₂) est compris entre 1 mm et 28 mm, de préférence entre 4 mm et 19 mm, et/ou que le rayon de courbure (R₂) plus grand fait entre six fois et douze fois la valeur du premier rayon de courbure (6 x R₁ ≤ R₂ ≤ 12 x R₁).

3. Insert de coupe selon la revendication 1 ou 2, **caractérisé par le fait que** la distance (t) que présente le point le plus bas de la zone abaissée du tranchant par rapport au niveau de zones voisines du tranchant, situées à l'extérieur du creux, est comprise entre 0,04 mm et 0,4 mm, de préférence entre 0,1 mm et 0,2 mm, et/ou que la zone du creux du tranchant est courbée d'une manière continûment concave et est située pour l'essentiel dans la zone dans laquelle le tranchant présente le rayon de courbure (R₂) plus important, de préférence de telle façon qu'une partie de la zone abaissée du tranchant s'étend jusque dans la zone centrale du coin de coupe avec un rayon de courbure (R₁).

4. Insert de coupe selon l'une des revendications 1 à 3, **caractérisé par le fait que** l'insert de coupe est disposé dans un porte-insert de coupe dans une position négative de montage sous les angles d'insertion (α) et (β) qui sont compris entre 3° ≤ α ≤ 10° et 3° ≤ β ≤ 10°, de préférence entre 5° ≤ α ≤ 8° et 5° ≤ β ≤ 8°, et/ou que l'insert de coupe présente des faces de dépouille disposées sous un angle positif et est disposé dans le porte-insert de coupe dans une position de montage de 0° ou dans une position positive de montage.

5. Insert de coupe pour les travaux par enlèvement de copeaux, en particulier pour le surfaçage et le tournage longitudinal de pièces (33), se composant d'un corps polygonal avec une face de coupe (20), une surface d'appui (21) espacée par rapport à celle-ci ainsi qu'avec des faces de dépouille (22) reliant la face de coupe et la surface d'appui, la face de coupe (20) et les faces de dépouille (22) formant des tranchants respectifs, et avec au moins un coin de coupe courbé formé par deux tranchants et ayant plusieurs zones à rayons de courbure différents, **caractérisé par le fait que** l'un au moins des tranchants - vu de dessus - possède une zone centrale convexe de coin de coupe avec un premier rayon (R₁) et une zone de tranchant concave adjacente avec un rayon plus important (R₃), et que la zone de tranchant concave est en sus élevée de sorte que - vu dans une vue de côté (sur la face de dépouille) - le tranchant s'étend de façon convexe dans cette zone.

6. Insert de coupe selon la revendication 5, **caractérisé par le fait que** la distance (h) que présente le point le plus haut de la zone élevée du tranchant par rapport au niveau de zones voisines non pas élevées du tranchant est comprise entre 0,04 mm et 0,4 mm, de préférence entre 0,1 mm et 0,2 mm, et/ou qu'une zone de transition de tranchant est prévue entre la zone centrale du coin de coupe et la zone concave du tranchant, ladite zone de transition de tranchant présentant un rayon de courbure (R₄) compris entre 0,1 mm et 0,4 mm.

7. Insert de coupe selon l'une des revendications 1 à 6, **caractérisé par le fait que** les tranchants sont réalisés à symétrie spéculaire par rapport à la bissectrice du coin de coupe.

8. Insert de coupe selon l'une des revendications 1 à 7, **caractérisé par le fait que** l'insert de coupe présente une forme rhomboïdale et que les zones à courbure différente du coin de coupe sont réalisées dans les coins de coupe opposés à angle aigu, et/ou que la zone abaissée ou la zone élevée du tranchant présente une longueur (bₛ) comprise entre 0,2 mm et 2,9 mm, de préférence entre 0,4 mm et 1,2 mm et/ou remplit la condition 0,4 R₁ ≤ bₛ ≤ 1,2 R₁.

9. Insert de coupe selon l'une des revendications 1 à 8, **caractérisé par le fait que** la zone de la face de coupe, qui est adjacente et perpendiculaire au tranchant, présente un flanc (31) descendant, ledit flanc (31) constituant une partie d'une rainure à former le copeau (30) qui s'étend parallèlement au tranchant.

10. Insert de coupe selon l'une des revendications 1 à 9, **caractérisé par le fait que** des éléments proéminents à former le copeau sont disposés sur la face de coupe à une distance du tranchant, et/ou que le tranchant secondaire de l'insert de coupe est orienté, lors du travail par enlèvement de copeaux, sous un angle de 2° ≤ κ ≤ 10°, de préférence de 4° ≤ κ ≤ 6°, par rapport à la pièce.
